# EUROPEAN PATENT APPLICATION

(11) **EP 2 264 608 A1**
(43) Date of publication of application: **22.12.2010**
(21) Application number: 09718254.7
(22) Date of filing: 02.03.2009
(51) Int. Cl.: G06F 13/00, G06F 12/00

(54) **PROXY SERVER, AND METHOD AND PROGRAM FOR CONTROLLING THE SAME**

(30) Priority: 05.03.2008 JP 2008054334
(71) Applicant: FUJIFILM Corporation, Tokyo 106-8620 (JP)
(72) Inventor: SHIIMORI, Yoshiko, Tokyo 106-8620 (JP); TA Lien Thi Quynh, Kawasaki-shi Kanagawa 215-0004 (JP)
(74) Representative: Stevens, Jason Paul
(86) International application number: PCT/JP2009/054351
(87) International publication number: WO 2009/110622

(57) **Abstract**

It is so arranged that when a client terminal communicates with a content server via a proxy server, the history of such communication can be ascertained. A request for a menu page is transmitted from the client terminal to the proxy server. A link to the content server has been embedded in the menu page. Data representing the menu page in which the URL of this link destination has been converted is transmitted to the client terminal. If the web page at the link destination that has been embedded in the menu page is requested by the client terminal, the proxy server restores the URL to the URL that prevailed before the conversion and requests the content server for the web page. The web page requested from the client terminal is stored in the proxy server. Thus, even if the client terminal requests the web pages of a plurality of content servers, the history thereof can be ascertained.

## Description

### Technical Field

This invention relates to a proxy server, a method of controlling the proxy server and a program for controlling the proxy server.

### Background Art

Since there is a limitation upon URL lengths that a mobile telephone can handle, there is now a technique available which enables web pages to be accessed irrespective of this limitation (see the specification of Japanese Patent Application Laid-Open No. 2003-141002).

With a client terminal such as a mobile telephone, there are instances where the client terminal and a content server communicate via a proxy server rather than directly. In a case where a client terminal thus communicates with a content server via a proxy server, when a plurality of content servers are connected to the proxy server and the client terminal communicates with the plurality of content servers, often the history of such communication cannot be ascertained and there are instances where access cannot be analyzed.

### Disclosure of the Invention

An object of the present invention is to so arrange it that in a case where a client terminal communicates with a plurality of content servers via a proxy server, the history of such communication can be determined.

According to the present invention, the foregoing object is attained by providing a proxy server constituting a communication system having a client terminal, the proxy server and a plurality of content servers, the proxy server comprising: URL converting means (a URL converting device) for converting a plurality of embedded URLs in a web page, wherein the plurality of URLs, which indicate web pages of the plurality of content servers, have been embedded in the web page as link destinations; web page data transmitting means (a web page data transmitting device) for transmitting web page data, which represents the web page in which the plurality of URLs that have been converted by the URL converting means have been embedded, to the client terminal; web page request receiving means (a web page request receiving device), responsive to transmission of the web page data to the client terminal by the web page data transmitting means, for receiving request data requesting a web page represented by one URL selected at the client terminal from among the plurality of URLs that have been transmitted from the client terminal; URL reverse-converting means (a URL reverse-converting device) for restoring the converted URL, which is represented by the request data received by the web page request receiving means, to the URL that prevailed before the conversion; storage control means (a storage control device) for controlling storage means so as to store the URL that has been restored by the URL reverse-converting means to that before the conversion; request-data transmitting means (a request data transmitting device) for transmitting request data, which requests a web page specified by the URL that has been restored by the URL reverse-converting means, to a content server, which is represented by the web page of the URL that has been restored to that before the conversion, from among the plurality of content servers; web page data receiving means (a web page data receiving device), responsive to receipt at said content server of request data that has been transmitted from the request-data transmitting means, for receiving web page data transmitted from said content server; and URL conversion control means (a URL conversion control device) for controlling the URL converting means in such a manner that when the URL indicating the web page of said content server has been embedded as a link destination in the web page represented by the web page data received by the web page data receiving means, the embedded URL is converted.

The present invention also provides a control method suited to the above-described proxy server. Specifically, the present invention provides a method of controlling a proxy server constituting a communication system having a client terminal, the proxy server and a plurality of content servers, the method comprising: URL converting means converting a plurality of embedded URLs in a web page, wherein the plurality of URLs, which indicate web pages of the plurality of content servers, have been embedded in the web page as link destinations; web page data transmitting means transmitting web page data, which represents the web page in which the plurality of URLs that have been converted by the URL converting means have been embedded, to the client terminal; in response to transmission of the web page data to the client terminal by the web page data transmitting means, web page request receiving means receiving request data requesting a web page represented by one URL selected at the client terminal from among the plurality of URLs that have been transmitted from the client terminal; URL reverse-converting means restoring the converted URL, which is represented by the request data received by the web page request receiving means, to the URL that prevailed before the conversion; storage control means controlling storage means so as to store the URL that has been restored by the URL reverse-converting means to that before the conversion; request-data transmitting means transmitting request data, which requests a web page specified by the URL that has been restored by the URL reverse-converting means, to a content server, which is represented by the web page of the URL that has been restored to that before the conversion, from among the plurality of content servers; in response to receipt at said content server of request data that has been transmitted from the request-data transmitting means, web page data receiving means receiving web page data transmitted from the content server; and URL conversion control means controlling the URL converting means in such a manner that when the URL indicating the web page of the content server has been embedded as a link destination in the web page represented by the web page data received by the web page data receiving means, the embedded URL is converted.

The present invention also provides a program for implementing the above-described method of controlling a proxy server.

In accordance with the present invention, a plurality of URLs, which are contained in a web page in which these URLs indicating the web pages of a plurality of content servers have been embedded as link destinations, are converted. Web page data representing this web page in which the converted URLs have been embedded is transmitted from the proxy server to a client terminal. One of the plurality of URLs is selected at the client terminal, and request data requesting this selected URL is transmitted from the client terminal to the proxy server. When the request data is received at the proxy server, the proxy server restores the selected URL to the URL that prevailed before the conversion. The restored URL is stored and request data requesting the web page specified by the restored URL is transmitted to a content server. Data representing the requested web page is transmitted from this content server to the proxy server. When a URL has been embedded in the requested web page, the URL is converted again. The web page in which the converted URL has been embedded is transmitted from the proxy server to the client terminal.

Since the URL of a content server requested from a client terminal is stored in the proxy server, the access history can be ascertained even if the client terminal has accessed a plurality of content servers via the proxy server.

The present invention also provides a communication system comprising a client terminal, a proxy server and a plurality of content servers.

The proxy server includes: menu request data receiving means (a menu request data receiving device) for receiving menu request data, which is transmitted from the client terminal, requesting a menu page in which URLs indicating web pages of the plurality of content servers have been embedded; identification data generating means (an identification data generating device), responsive to receipt of the menu request data by the menu request data receiving means, for generating identification data of the client terminal; URL converting means (a URL converting device), responsive to receipt of the menu request data by the menu request data receiving means, for converting the plurality of URLs that have been embedded in the menu page; and menu page file transmitting means (a menu page file transmitting device) for transmitting a menu page file, which represents the menu page in which the plurality of URLs converted by the URL converting means have been embedded, to the client terminal.

The client terminal includes: menu page file receiving means (a menu page file receiving device) for receiving the menu page file transmitted from the menu page file transmitting means of the proxy server; and first request data transmitting means (a first request data transmitting device) for transmitting, to the proxy server, request data requesting a web page represented by one URL among the plurality of URLs that have been embedded in the menu page represented by the menu page file received by the menu page file receiving means.

The proxy server further includes: first request data receiving means (a first request data receiving device) for receiving request data transmitted from the first request data transmitting means of the client terminal; URL reverse-converting means (a URL reverse-converting device), responsive to receipt of the request data by the first request data receiving means, for restoring the converted URL, which is represented by the request data received, to the URL that prevailed before the conversion; storage control means (a storage control device) for controlling storage means so as to store, in association with each other, the URL that has been restored by the URL reverse-converting means to that before the conversion and the identification data that has been generated by the identification data generating means; and second request data transmitting means (a second request data transmitting device) for transmitting request data requesting a web page specified by the URL that has been restored by the URL reverse-converting means to a content server, which is represented by the web page of the restored URL, from among the plurality of content servers.

The content server includes: second request data receiving means (a second request data receiving device) for receiving request data transmitted from the second request data transmitting means of the proxy server; and first web page data transmitting means (first web page data transmitting device) for transmitting data of the web page, which has been requested by the request data received by the second request data receiving means, to the proxy server.

The proxy server further includes: web page data receiving means (a web page data receiving device) for receiving web page data transmitted from the first web page data transmitting means of the content server; and second web page data transmitting means (a second web page data transmitting device) for transmitting the web page data, which has been received by the web page data receiving means, to the client terminal.

In accordance with the present invention, menu request data requesting a menu page in which URLs indicating web pages of a plurality of content servers have been embedded is transmitted from a client terminal to a proxy server and is received by the proxy server. In response, the proxy server generates identification data and converts the plurality of URLs that have been embedded in the menu page. A menu page file representing the menu page in which the converted URLs have been embedded is transmitted from the proxy server to the client terminal.

When the menu page file is received at the client terminal, the menu page is displayed and a selection is made from among the URLs that have been embedded in the menu page. Request data requesting the selected URL is transmitted from the client terminal to the proxy server.

When the request data is received at the proxy server, the URL of the web page requested by this request data is restored to the URL that prevailed before the conversion of the URL. The URL that prevailed before conversion and the identification data are stored in association with each other, and request data requesting the web page specified by the restored URL is transmitted to the content servers of the specified web page.

When the request data is received at the content server, the web page data requested by this request data is transmitted to the proxy server.

When the web page data is received at the proxy server, the received web page data is transmitted from the proxy server to the client terminal. The web page represented by the web page data is displayed on the client terminal.

Since the URL of a content server requested from a client terminal is stored in a proxy server in association with identification data, the history of access to content servers by the client terminal can be ascertained. The access history can be determined even if the client terminal has accessed a plurality of content servers via the proxy server.

The proxy server constituting the above-described communication system may be implemented in stand-alone fashion, and a method and program for controlling this proxy server may be provided.

### Brief Description of the Drawings

Fig. 1 illustrates an overview of the present invention;
Fig. 2 is an example of a menu page;
Fig. 3 is an example of a web page;
Fig. 4 is an example of a web page;
Fig. 5 is an example of a menu page;
Fig. 6 is an example of a web page;
Fig. 7 is an example of a web page;
Fig. 8 is an example of a service list table;
Fig. 9 is an example of a URL conversion / reverse-conversion table;
Fig. 10 is an example of a session information table;
Fig. 11 is an example of a log table;
Fig. 12 is a flowchart illustrating processing executed by a client terminal;
Fig. 13 is a flowchart illustrating processing executed by a proxy server; and
Fig. 14 is a flowchart illustrating processing executed by a content server.

### Best Mode for Carrying Out the Invention

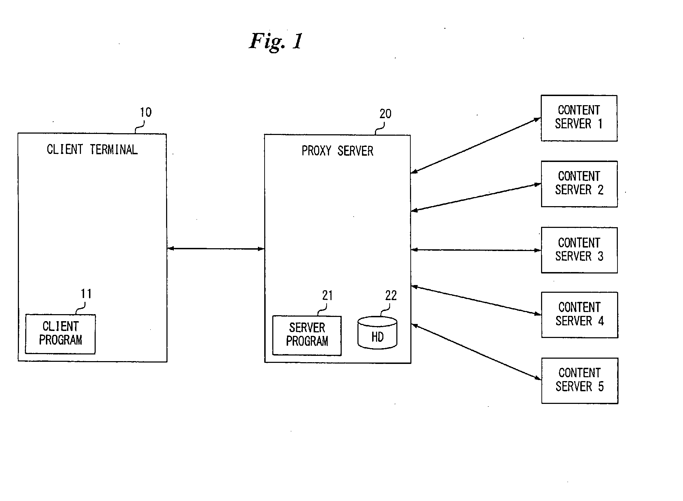

Fig. 1 is a diagram illustrating the overall configuration of a communication system according to an embodiment of the present invention.

The communication system according to this embodiment includes a client terminal 10 typified by a mobile telephone (although the device is not limited to a mobile telephone) and a proxy server (a proxy server) 20. Content servers 1 to 5 are connected to the proxy server 20. The client terminal 10 and the proxy server 20 are capable of communicating directly, and the proxy server 20 and content servers 1 to 5 are also capable of communicating directly. The client terminal 10 and content servers 1 to 5 communicate via the proxy server 20 and not directly.

A client program 11 for controlling operation, described later, has been installed in the client terminal 10. The client terminal 10 includes a CPU, a display unit for displaying a web page (menu page), a communication unit for communicating with the proxy server 20, a keypad for applying various commands and a memory, etc. (although none of these are illustrated.)

A server program 21 for controlling operation, described later, has been installed in the proxy server 20. The server program 21, which has been stored on a recording medium typified by a CD-ROM (compact-disk - read-only memory). The server program 21 is read by a CD-ROM drive (not shown) and installed in the proxy server 20. Naturally, it may be so arranged that the server program 21 transmitted from another server or the like is received and installed in the proxy server 20. The proxy server 20 further includes a hard disk 22 for storing various tables, described later, and other data. The hard disk 22 is accessed by a hard-disk drive (not shown).

A server program for controlling operation, described later, has been installed in each of the content servers 1 to 5. Each of the content servers 1 to 5 also incorporates a hard disk storing data, etc., of a web page displayed on the display unit of the client terminal 10.

The proxy server 20 and each of the content servers 1 to 5 also include a display unit, communication unit, memory, hard-disk drive and keyboard, etc.

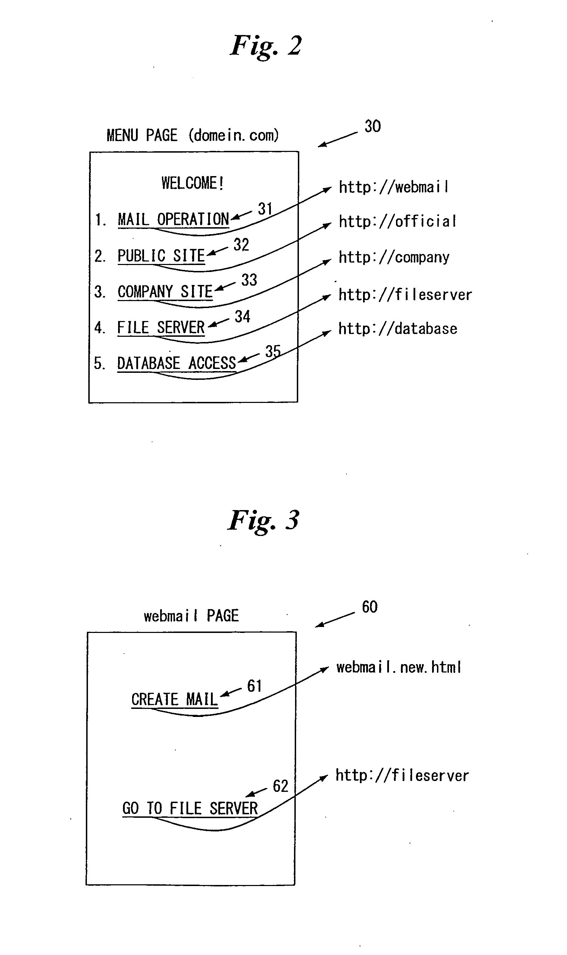

Fig. 2 illustrates an example of a menu page having the URL "domein.com".

The web page 30, which has the URL "domein.com", contains a first character string 31 reading "MAIL OPERATION", a second character string 32 reading "OFFICIAL SITE", a third character string 33 reading "COMPANY SITE", a fourth character string 33 reading "FILE SERVER" and a fifth character string 35 reading "DATABASE ACCESS". These first to fifth character strings 31 to 35 are clickable and constitute hot text. The first to fifth character strings 31, 32, 33, 34 and 35 are linked to URLs [http://webmail], [http://official], [http://company], [http://fileserver] and [http://database] of web pages of the first content server 1, second content server 2, third content server 3, fourth content server 4 and fifth content server 5, respectively.

Fig. 3 illustrates an example of a webmail page having the URL "http://webmail".

The webmail page contains a first character string 61 reading "CREATE MAIL" and a second character string 62 reading "GO TO FILE SERVER". The first character string 61 and second character string 62 are both clickable and constitute hot text. The first character string 61 is linked to a web page having the URL "webmail.new.html". The second character string 62 is linked to [http://fileserver].

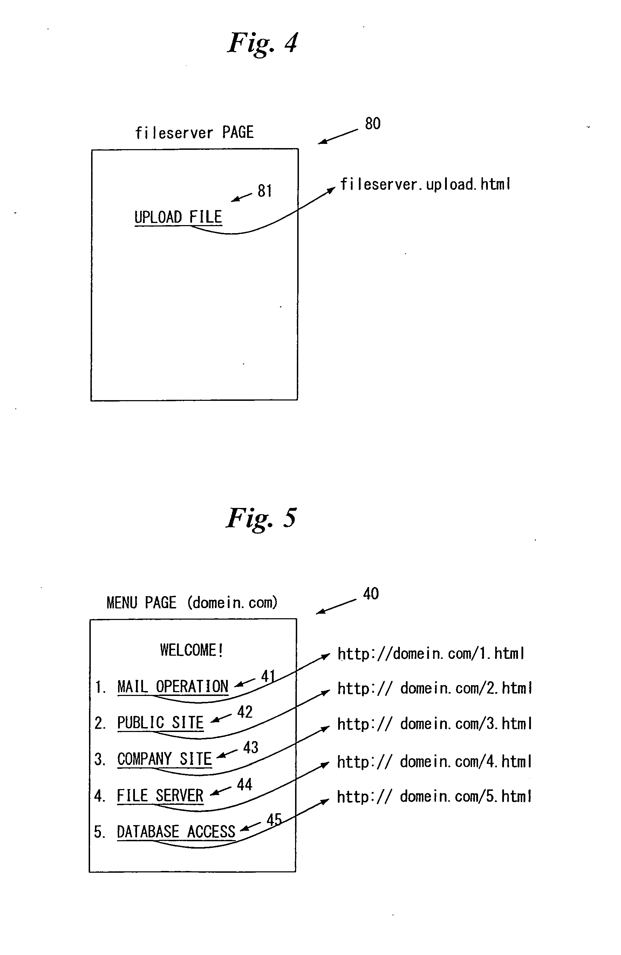

Fig. 4 illustrates an example of a fileserver page having the URL "http://fileserver".

The fileserver page contains a character string 81 reading "UPLOAD FILE". The character string 81 is clickable and constitutes hot text. The character string 81 is linked to a web page having the URL "fileserver.upload.html".

If the first character string 31 is clicked in a case where the menu page 30 shown in Fig. 2 is being displayed, the client terminal communicates with the first content server 1 and the webmail page 60 shown in Fig. 3, which is the link destination of the first character string 31, is displayed. Similarly, if the second character string 32, third character string 33, fourth character string 34 and fifth character string 35 are clicked in a case where the menu page 30 shown in Fig. 2 is being displayed, then the client terminal communicates with the second content server 2, third content server 3, fourth content server 4 and fifth content server 5, in which data representing the web pages at the link destinations of the respective second character string 32, third character string 33, fourth character string 34 and fifth character string 35 has been stored, and these web pages are displayed. For example, if the fourth character string 34 on the menu page 30 is clicked, then the client terminal communicates with the fourth content server 4 and the fileserver page shown in Fig. 4 is displayed.

If the first character string 61 is clicked in a case where the webmail page 60 shown in Fig. 3 is being displayed, then the client terminal communicates with the first content server 1 and the web page having the URL reading "webmail.new.html" is displayed. Further, if the second character string 62 is clicked, then the client terminal communicates with the fourth content server 4 and the fileserver page shown in Fig. 4 is displayed.

In this embodiment, a menu page 40 shown in Fig. 5 is displayed on the display screen of the display unit of client terminal 10 if the menu page 30 shown in Fig. 2 is requested at the client terminal 10.

Fig. 5 illustrates an example of the menu page.

In a manner similar to the web page 30 shown in Fig. 2, the web page 40 contains a first character string 41 reading "MAIL OPERATION", a second character string 42 reading "OFFICIAL SITE", a third character string 43 reading "COMPANY SITE", a fourth character string 44 reading "FILE SERVER" and a fifth character string 45 reading "DATABASE ACCESS". These first to fifth character strings 41 to 45 are clickable and constitute hot text. Embedded in these first to fifth character strings 41, 42, 43, 44 and 45 as the URLs of the link destinations are [http://domein.com/1.html], [http://domein.com/2.html], [http://domein.com/3.html], [http://domein.com/4.html] and [http://domein.com/5.html], respectively.

As will be understood if the menu page 30 shown in Fig. 2 and the menu page 40 shown in Fig. 5 are compared, the embedded URLS of the link destinations have been converted.

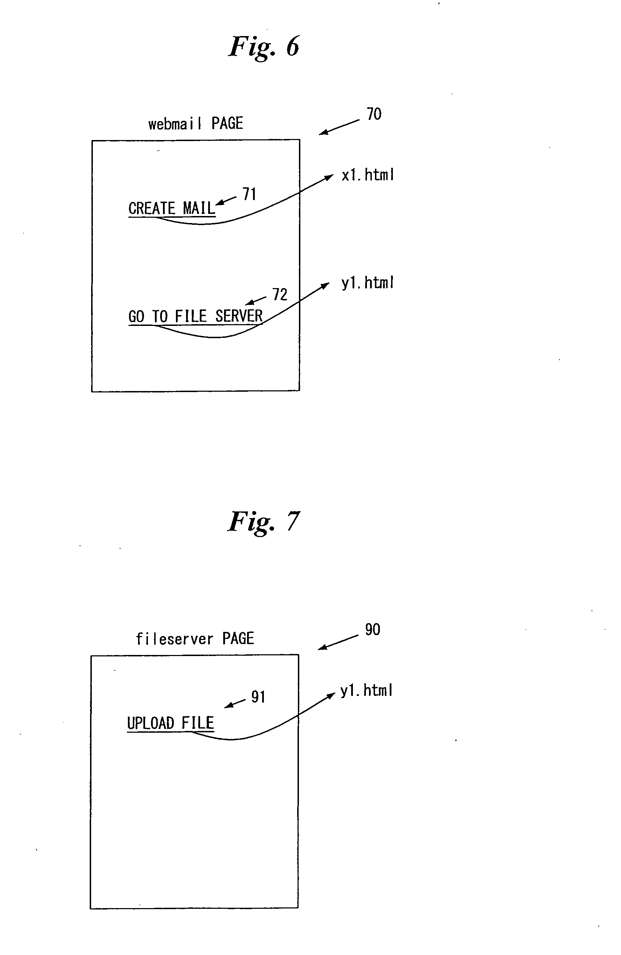

Further, in this embodiment, a webmail page shown in Fig. 6 is displayed on the display screen of the display unit of client terminal 10 if the webmail page shown in Fig. 3 is requested at the client terminal 10.

Fig. 6 is an example of the webmail page 70.

In a manner similar to the webmail page 60 shown in Fig. 3, the webmail page 70 contains a first character string 71 reading "MAIL OPERATION" and a second character string 72 reading "GO TO FILE SERVER". Here x1.html has been embedded in the first character string 71 as the URL of the link destination, and y1.html has been embedded in the second character string 72 as the URL of the link destination. Thus, in the case of the webmail page 70 shown in Fig. 6, the embedded URLs of the link destinations have been converted in comparison with the webmail page 60 shown in Fig. 3.

Fig. 7 is an example of a fileserver page 90.

In a manner similar to the fileserver page 80 shown in Fig. 4, the fileserver page 90 contains a character string 91 reading "UPLOAD FILE". Here y1.html has been embedded in the character string 91 as the URL of the link destination. In the case of.the webmail page 90 shown in Fig. 7, the embedded URL of the link destination has been converted in comparison with the fileserver page 80 shown in Fig. 4.

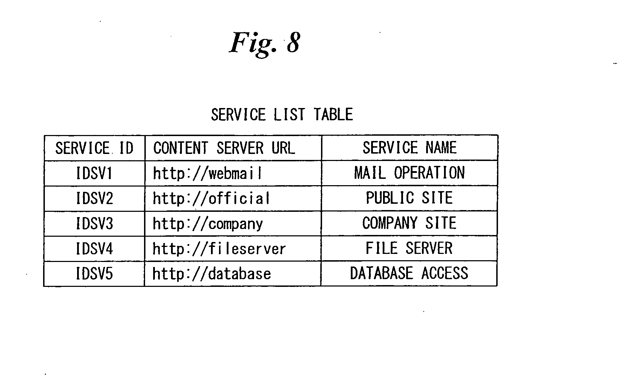

Figs. 8 to 11 are examples of various tables stored in the proxy server.

Fig. 8 is an example of a service list table.

The service list table indicates the URLs of the content servers 1 to 5 connected to the proxy server 20, and the services capable of being provided by these content servers 1 to 5. The URLS and the service names of the content servers 1 to 5 have been stored in correspondence with service IDs that identify the services.

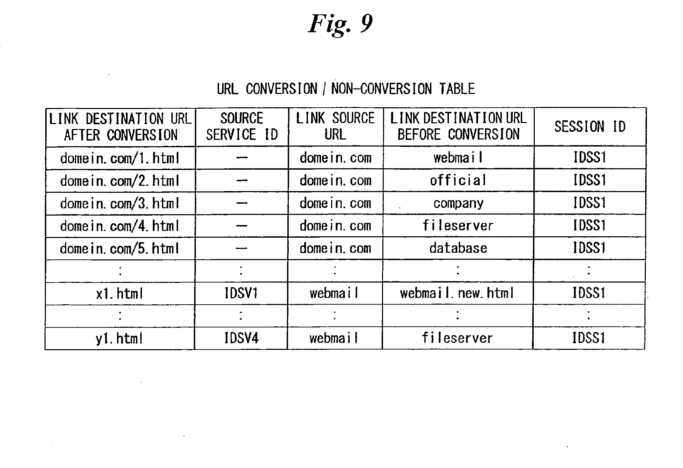

Fig. 9 is an example of a URL conversion / reverse-conversion table.

The URL conversion / reverse-conversion table contain URLs before and after conversion in a case where the URLs of the link destinations that have been embedded in the menu page 30 or web pages 60, 80, as shown in Figs. 2 to 4, have been converted to the URLs of the link destinations that have been embedded in the menu page 40 and web pages 70, 90, as shown in Figs. 5 to 7. Further, the URL conversion / reverse-conversion table also contains the URLs (link source URLs) of the menu page or web pages of the link sources in which the URLs before and after conversion have been embedded.

The URL conversion/reverse-conversion table further contains the service IDs (source service IDs) and the session IDs (identification data) indicated by the link source URLs. A session ID is generated in a case where the client terminal 10 has requested the proxy server 20 for the menu page. As will be described later, whether the client terminal 10 has communicated with content servers 1 to 5 via the proxy server 20 can be ascertained using the session ID.

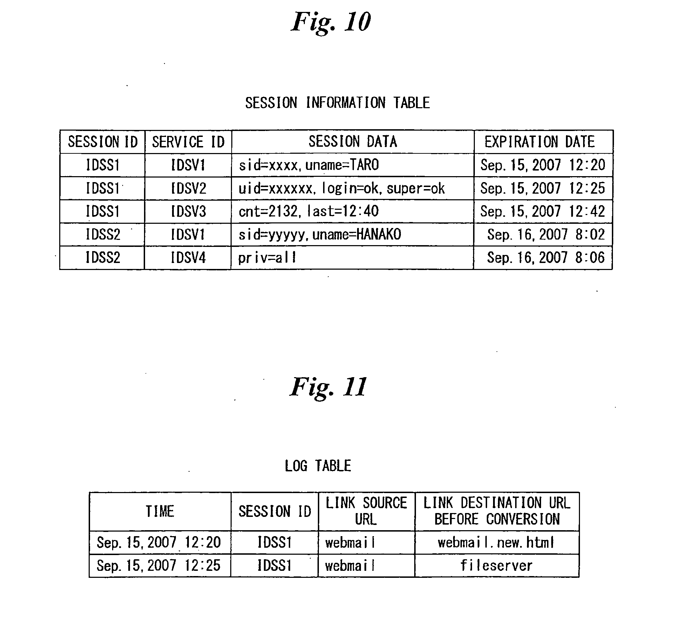

Fig. 10 is an example of a session information table.

The session information table contains session information (cookies) generated in communication within the communication system. Session data and expiration dates are stored in the session information table in correspondence with session IDs and service IDs.

Fig. 11 is an example of a log table.

The log table contains, on a per-session-ID basis, the URLs of web pages that the client terminal 10 has requested. The log table contains the URLs (link destination URLs before conversion) of requested web pages and the link source URLs (link source URLs in which the requested URLs were embedded) from which these requests are requested. The times at which the requests were made are also stored in the log table.

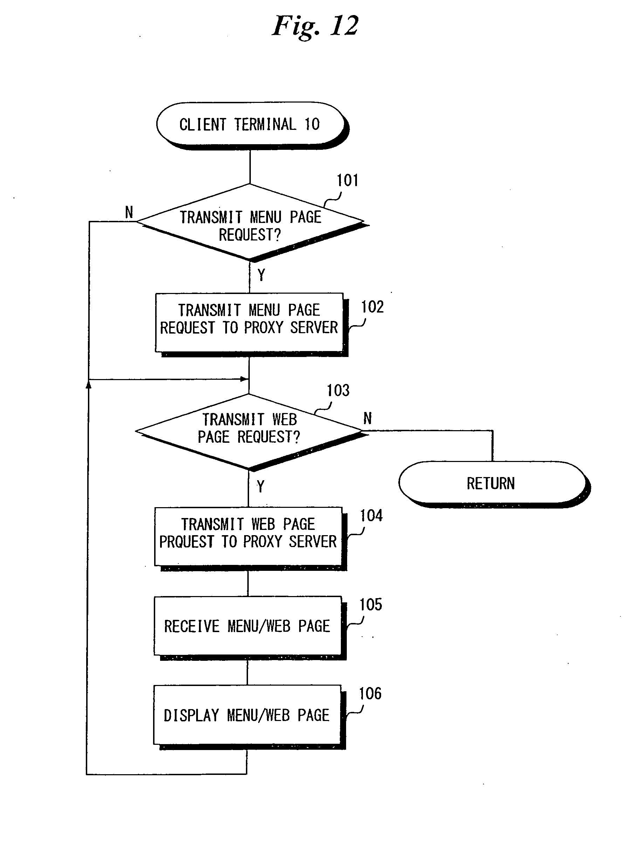

Figs. 12 to 14 are flowcharts illustrating processing executed in this communication system.

Whenever the client terminal 10 accesses the proxy server 20 starting from the disconnected state, a menu page request is transmitted from the client terminal 10 to the proxy server 20 ("YES" at step 101, and step 102, in Fig. 12).

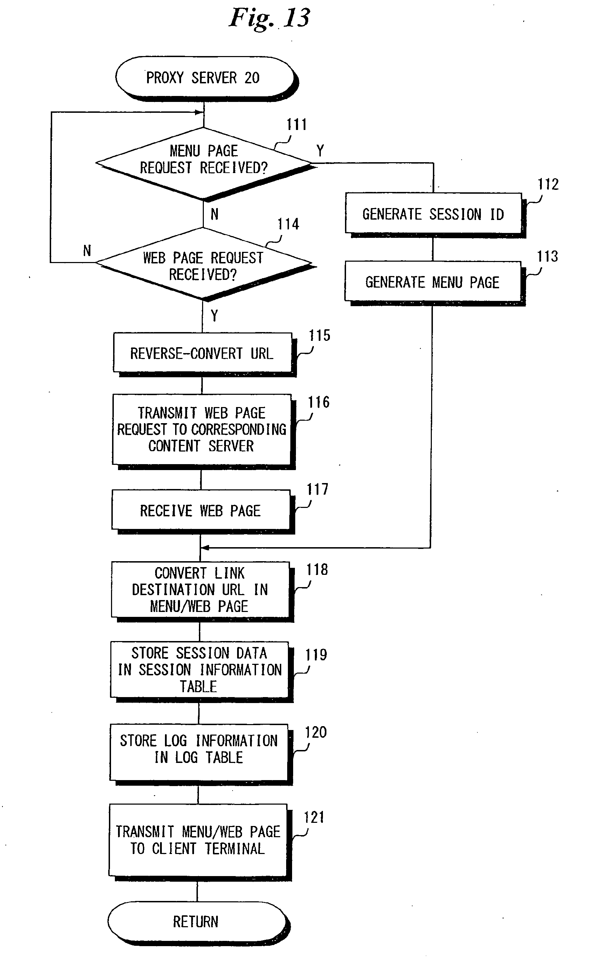

When the menu page request transmitted from the client terminal 10 is received at the proxy server 20 ("YES" at step 111 in Fig. 13), the proxy server 20 generates a session ID for identifying a series of processes that will extend from receipt of the menu page request to severance of communication between the client terminal 10 and proxy server 20 (step 112 in Fig. 13). Further, the proxy server 20 generates the menu page 30 shown in Fig. 2 (step 113 in Fig. 13).

When the menu page 30 is generated, the URLs of the link destinations that have been embedded in the menu page 30 are converted and the new menu page 40 is generated in the manner shown in Fig. 5 (step 118 in Fig. 13). The link destination URLs before and after conversion are stored in the URL conversion/reverse-conversion table. In a case where session data exists, the session data is stored in the session information table (step 119 in Fig. 13). If necessary, log information to the effect that the menu page 30 has been accessed is stored in the log table. Naturally, in the processing regarding the menu page 30, the client terminal 10 does not communicate with the content servers 1 to 5 via the proxy server 20 and therefore it need not necessarily store log information in the log table. (For this reason, log information indicating the fact that the client terminal 10 accessed the menu page 30 has not been stored in the log table shown in Fig. 11.)

As shown in Fig. 5, menu page data representing the menu page 40 in which the embedded link destination URLs have been converted is transmitted from the proxy server 20 to the client terminal 10 (step 121 in Fig. 13).

The menu page data that has been transmitted from the proxy server 20 is received at the client terminal 10 (step 105 in Fig. 12). When this occurs, the menu page 40 shown in Fig. 5 represented by this menu page data is displayed on the display screen of the display unit of the client terminal 10 (step 106 in Fig. 12).

Any one of the character strings from the first character string 41 to the fifth character string 45 being displayed on the menu page 40 is clicked by the user of the client terminal 10. When this is done, the client terminal 10 sends the proxy server 20 a request for the web page specified by the link destination URL that has been embedded in the clicked character string ("YES" at step 103, and step 104, in Fig. 12).

The web page request transmitted from the client terminal 10 is received at the proxy server 20 ("YES" at step 114 in Fig. 13). When this is done, the proxy server 20 refers to the URL conversion/reverse-conversion table and restores the URL of the requested web page to the URL that prevailed before the conversion.

The menu page 40 shown in Fig. 5 is displayed on the display screen of the display unit of the client terminal 10. It is assumed here that the first character string 41 has been clicked by the user. In response, since http://domein.com/1.html has been embedded in the first character string 41 as the converted URL, the request for the web page having http://domein.com/1.html as its URL is transmitted from the client terminal 10 to the proxy server 20. Since the URL http://domein.com/1.html is that obtained after the conversion of the URL http://webmail in the proxy server 20, the proxy server 20 restores this URL to http://webmail, namely the URL before the conversion.

A request for the web page specified by this URL that prevailed before the conversion is transmitted to whichever of the content servers 1 to 5 is specified by this URL that prevailed before the conversion (step 116 in Fig. 13).

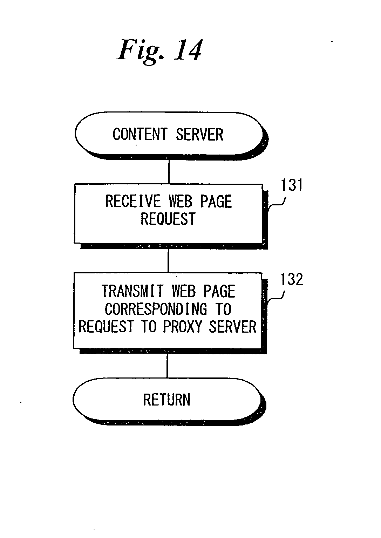

When the web page request transmitted from the proxy server 20 is received at any content server among the content servers 1 to 5 (step 131 in Fig. 14), the web page data conforming to the request is transmitted from this content server to the proxy server 20 (step 132 in Fig. 14).

When the web page data transmitted from the content server is received at the proxy server 20 (step 117 in Fig. 13), the link destination URL that has been embedded in the web page is converted in a manner similar to that of the menu page (step 118 in Fig. 13). The session data is stored in the session information table (step 119 in Fig. 13) and the log information is stored in the log table (step 120 in Fig. 13). Web page data in which the embedded link destination has been converted is transmitted from the proxy server 20 to the client terminal 10 (step 121 in Fig. 13).

When the web page data transmitted from the proxy server 20 is received at the client terminal 10 (step 105 in Fig. 12), the web page represented by this web page data is displayed on the display screen of the display unit of the client terminal 10 (step 106 in Fig. 12). By clicking on hot text contained in this web page, the web page of the URL of the link destination that has been embedded in this web page is requested. Such a request for the web page is implemented in a manner similar to that when the menu page was requested.

Thus, as described above, if the first character string 41 contained in the menu page 40 shown in Fig. 5 is clicked, the URL of the link destination that has been embedded in the first character string 41 is restored from http://domein/1.html to http://webmail, which was the URL before conversion, and a request for the webmail page of Fig. 3 having the URL http://webmail is transmitted to the first content server 1. In response, data representing the webmail page shown in Fig. 3 is transmitted from the first content server 1 to the proxy server 20.

Upon receiving the data representing the webmail page shown in Fig. 3, the proxy server 20 converts the embedded link destination URL and generates the webmail page 70 in which the converted URL has been embedded, as shown in Fig. 6. The proxy server 20 stores the link destination pre- and post-conversion URLs in the conversion/reverse-conversion table and transmits the data representing the webmail page 70 of Fig. 6 to the client terminal 10.

The webmail page 70 shown in Fig. 6 is displayed on the client terminal 10 and either first character string 71 or second character string 72 is clicked by the user. If the first character string 71 is clicked, a request for the URL x1.html is transmitted from the client terminal 10 to the proxy server 20, where webmail.new.html, which is the URL that prevailed before the conversion, is restored. A web page request is transmitted from the restored URL to the first content server, and web page data conforming to this request is transmitted from this content server to the proxy server.

If the second character string 72 is clicked, then a request for the URL y1.html is transmitted from the client terminal 10 to the proxy server 20, where http://fileserver, which is the URL that prevailed before the conversion, is restored. A web page request is transmitted from the restored URL to the fourth content server 4. Data representing the fileserver page 80 shown in Fig. 4 is transmitted from the fourth content server 4 to the proxy server 20. As shown in Fig. 7, the proxy server 20 generates the fileserver page 90, in which the embedded link destination has been converted, from the fileserver page 80 of Fig. 4.,

Thus, the proxy server 20 converts a link destination URL that has been embedded in a web page or the like and stores the pre- and post-conversion URLs in the URL conversion/reverse-conversion table, as shown in Fig. 9. Therefore, even though the URL is converted, the URL that prevailed before conversion can be restored and the content server can be accessed. Further, the proxy server 20 restores a URL, which has been requested from the client terminal 10, to the URL that prevailed before the conversion and stores the restored URL in a log table along with the session ID, as illustrated in Fig. 11. The history of URLs that the client terminal 10 has requested can be ascertained by referring to the log table. In particular, even if the plurality of content servers 1 to 5 have been connected to the proxy server 20, which of the content servers among the content servers 1 to 5 has been accessed can be determined.

Further, since session information has been stored in the proxy server 20, the session information can be managed even at the client terminal 10 that cannot utilize the session information.

## Claims

1. A proxy server constituting a communication system having a client terminal, the proxy server and a plurality of content servers, the proxy server comprising:
URL converting means for converting a plurality of embedded URLs in a web page, wherein the plurality of URLs, which indicate web pages of the plurality of content servers, have been embedded in the web page as link destinations;
web page data transmitting means for transmitting web page data, which represents the web page in which the plurality of URLs that have been converted by said URL converting means have been embedded, to the client terminal;
web page request receiving means, responsive to transmission of the web page data to the client terminal by said web page data transmitting means, for receiving request data requesting a web page represented by one URL selected at the client terminal from among the plurality of URLs that have been transmitted from the client terminal;
URL reverse-converting means for restoring the converted URL, which is represented by the request data received by said web page request receiving means, to the URL that prevailed before the conversion;
storage control means for controlling storage means so as to store the URL that has been restored by said URL reverse-converting means to that before the conversion;
request-data transmitting means for transmitting request data, which requests a web page specified by the URL that has been restored by said URL reverse-converting means, to a content server, which is represented by the web page of the URL that has been restored to that before the conversion, from among the plurality of content servers;
web page data receiving means, responsive to receipt at the content server of request data that has been transmitted from said request-data transmitting means, for receiving web page data transmitted from said content server; and
URL conversion control means for controlling said URL converting means in such a manner that when the URL indicating the web page of said content server has been embedded as a link destination in the web page represented by the web page data received by said web page data receiving means, the embedded URL is converted.

2. A method of controlling a proxy server constituting a communication system having a client terminal, the proxy server and a plurality of content servers, said method comprising:
URL converting means converting a plurality of embedded URLs in a web page, wherein the plurality of URLs, which indicate web pages of the plurality of content servers, have been embedded in the web page as link destinations;
web page data transmitting means transmitting web page data, which represents the web page in which the plurality of URLs that have been converted by the URL converting means have been embedded, to the client terminal;
in response to transmission of the web page data to the client terminal by the web page data transmitting means, web page request receiving means receiving request data requesting a web page represented by one URL selected at the client terminal from among the plurality of URLs that have been transmitted from the client terminal;
URL reverse-converting means restoring the converted URL, which is represented by the request data received by the web page request receiving means, to the URL that prevailed before the conversion;
storage control means controlling storage means so as to store the URL that has been restored by the URL reverse-converting means to that before the conversion;
request-data transmitting means transmitting request data, which requests a web page specified by the URL that has been restored by the URL reverse-converting means, to a content server, which is represented by the web page of the URL that has been restored to that before the conversion, from among the plurality of content servers;
in response to receipt at said content server of request data that has been transmitted from the request-data transmitting means, web page data receiving means receiving web page data transmitted from the content server; and
URL conversion control means controlling the URL converting means in such a manner that when the URL indicating the web page of the content server has been embedded as a link destination in the web page represented by the web page data received by the web page data receiving means, the embedded URL is converted.

3. A program for controlling a proxy server constituting a communication system having a client terminal, the proxy server and a plurality of content servers, said program controlling the proxy server so as to cause the proxy server to:
convert a plurality of embedded URLs in a web page by URL converting means, wherein the plurality of URLs, which indicate web pages of the plurality of content servers, have been embedded in the web page as link destinations;
transmit web page data, which represents the web page in which the plurality of URLs that have been converted have been embedded, to the client terminal;
in response to transmission of the web page data to the client terminal, receive request data requesting a web page represented by one URL selected at the client terminal from among the plurality of URLs that have been transmitted from the client terminal;
restore the converted URL, which is represented by the received request data, to the URL that prevailed before the conversion;
control storage means so as to store the URL that has been restored to that before the conversion;
transmit request data, which requests a web page specified by the URL that has been restored, to a content server, which is represented by the web page of the URL that has been restored to that before the conversion, from among the plurality of content servers;
in response to receipt at said content server of request data that has been transmitted, receive web page data transmitted from the content server; and
control the URL converting means in such a manner that when the URL indicating the web page of the content server has been embedded as a link destination in the web page represented by the received web page data, the embedded URL is converted.
